# EUROPEAN PATENT APPLICATION

(11) **EP 4 618 282 A1**
(43) Date of publication of application: **17.09.2025**
(21) Application number: 23934981.4
(22) Date of filing: 31.10.2023
(51) Int. Cl.: H01M 50/244

(54) **SHEET ASSEMBLY, CASING, BATTERY, AND ELECTRIC DEVICE**

(30) Priority: 23.04.2023 CN 202310439622
(71) Applicant: Contemporary Amperex Technology (Hong Kong) Limited, Hong Kong (HK)
(72) Inventor: LIN, Zhiqiang, Ningde, Fujian 352100 (CN); WANG, Qing, Ningde, Fujian 352100 (CN); WANG, Yong, Ningde, Fujian 352100 (CN); FU, Li, Ningde, Fujian 352100 (CN)
(74) Representative: Gong, Jinping
(86) International application number: PCT/CN2023/128903
(87) International publication number: WO 2024/221813

(57) **Abstract**

This application is applicable to the technical field of batteries, and provides a plate assembly, a box body, a battery, and an electric apparatus. The plate assembly includes a first plate, a second plate, and a support body. The first plate is provided with a cavity and a reinforcing portion, and the reinforcing portion is located in the cavity. At least one end of the first plate is provided with a slot with an opening facing outside the cavity, and the slot is located in a space enclosed by an inner wall of the cavity. The support body is inserted into the slot. The second plate is located on a side of the support body far away from the first plate, and is connected to the first plate. The plate assembly, the box body, the battery, and the electric apparatus provided in this application can improve reliability of a connection structure of two plates.

## Description

This application claims priority to Chinese Patent Application No. 202310439622.3, filed with the China National Intellectual Property Administration on April 23, 2023 and entitled "PLATE ASSEMBLY, BOX BODY, BATTERY, AND ELECTRIC APPARATUS", which is incorporated herein by reference in its entirety.

### TECHNICAL FIELD

This application relates to the technical field of batteries, and in particular, to a plate assembly, a box body, a battery, and an electric apparatus.

### BACKGROUND

A size and functions of a plate are limited. In many cases, using one plate usually cannot meet use requirements. In this case, at least two plates need to be spliced for use, but reliability of a connection structure of two plates is currently poor.

### SUMMARY

An objective of embodiments of this application is to provide a plate assembly, a box body, a battery, and an electric apparatus, aiming to alleviate a current technical problem that reliability of a connection structure of two plates is poor.

### TECHNICAL SOLUTIONS

Technical solutions used in embodiments of this application are as follows.

According to a first aspect, a plate assembly is provided. The plate assembly includes a first plate, a second plate, and a support body. The first plate is provided with a cavity and a reinforcing portion, and the reinforcing portion is located in the cavity. At least one end of the first plate is provided with a slot with an opening facing outside the cavity, and the slot is located in a space enclosed by an inner wall of the cavity. The support body is inserted into the slot. The second plate is located on a side of the support body far away from the first plate, and is connected to the first plate.

According to the plate assembly provided in this embodiment of this application, the slot is limited in the space enclosed by the inner wall of the cavity. In this way, a risk of processing the inner wall of the cavity in this area when processing the slot can be reduced, so that a risk that a thickness of an upper body or a lower body of the first plate is changed after processing the slot in the processing process is reduced, and adverse influence of a connection structure between the first plate and the second plate due to different wall thicknesses in different areas of the first plate can be further reduced to some extent, to improve reliability of the connection structure between the first plate and the second plate.

In some embodiments, the reinforcing portion divides at least one end of the cavity into a plurality of sub-cavities. At the end, provided with the sub-cavities, of the first plate, at least one reinforcing portion is provided with a first recess with an opening facing outside the cavity. The first recess connects two adjacent sub-cavities. The first recess and the sub-cavities that are in communication form the slot. The solution provided in this embodiment is used for the slot. This facilitates preparation.

In some embodiments, protruding structures are formed between at least one inner wall of the first recess in a height direction and the inner wall of the cavity. The support body is provided with second recesses at positions corresponding to the protruding structures, and the second recesses are in insertion fit with the protruding structures. The solution provided in this embodiment is adopted, so that the support body can be positioned with the slot through the protruding structures and the second recesses, to stably support a corresponding end of the first plate.

In some embodiments, two protruding structures are formed at both ends, in the height direction, of at least one reinforcing portion provided with the first recess. In this way, there can be a specific distance between a top surface of the slot located on the reinforcing portion and a lower surface of the upper body, and there is a specific distance between a bottom surface of the slot on the reinforcing portion and an upper surface of the lower body. This can further reduce the risk of processing the inner wall of the cavity in a process of slot processing.

In some embodiments, two protruding structures are formed at both ends, in the height direction, of all reinforcing portions provided with first recesses. In this embodiment, all slots can be implemented by slotting in middle areas of corresponding reinforcing portions, so that there is a specific distance between top surfaces of slot bodies that are of all slots and that are located on the reinforcing portions and the lower surface of the upper body. In addition, there is a specific distance between bottom surfaces of the slot bodies that are of all slots and that are located on the reinforcing portions and the upper surface of the lower body. This can further reduce the risk of processing the inner wall of the cavity in the process of slot processing.

In some embodiments, the second recesses are in clearance fit with the corresponding protruding structures. The second recesses are in clearance fit with the corresponding protruding structures. This facilitates insertion of the support body into the slot.

In some embodiments, a height of the protruding structures protruding from the inner wall of the cavity is 0.3 mm-1.2 mm. With this arrangement, the risk of processing the inner wall of the cavity when processing the slot is low.

In some embodiments, a height of the protruding structures protruding from the inner wall of the cavity is 0.5 mm-1 mm. With this arrangement, the risk of processing the inner wall of the cavity when processing the slot is low. In addition, a size of the slot is large. This facilitates insertion of the support body.

In some embodiments, the first plate includes the upper body and the lower body spaced apart in the height direction, the cavity is formed between the upper body and the lower body, and the reinforcing portion is arranged on the upper body and/or the lower body. The first plate adopts the structure provided in this embodiment, and the structure is simple, light, and easy to process.

In some embodiments, in the same slot, the lower surface of the upper body has a lowest point, and a bottom surface of any protruding structure connected to the lower surface of the upper body is flush with or below the lowest point. The plate assembly provided in this embodiment defines a positional relationship, in the same slot, between the bottom surface of any protruding structure connected to the upper body and the lower surface of the upper body, so that the bottom surfaces of all protruding structures connected to the upper body are not higher than the lowest point of the corresponding area of the upper body. In this way, the upper surface of the first recess in the corresponding slot can be obtained through horizontal cutting, and the surface of the upper body is not damaged during cutting, that is, the inner wall of the cavity is not processed, and preparation efficiency of the slot can be improved, so that a plurality of goals are obtained with a single action.

In some embodiments, in the same slot, the upper surface of the lower body has a highest point, and a top surface of any protruding structure connected to the upper surface of the lower body is flush with or above the highest point. The plate assembly provided in this embodiment defines a positional relationship, in the same slot, between the top surface of any protruding structure connected to the lower body and the upper surface of the lower body, so that the top surfaces of all protruding structures connected to the lower body are not lower than the highest point of the corresponding area of the lower body. In this way, the lower surface of the first recess in the corresponding slot can be obtained through horizontal cutting, and the upper surface of the lower body is damaged during cutting, that is, the inner wall of the cavity is not processed, and preparation efficiency of the slot can be improved, so that a plurality of goals are obtained with a single action.

In some embodiments, the first plate is of an integrated structure. The first plate adopts the integrated structure, and the structure is stable.

In some embodiments, the first plate is a metal plate. The first plate is made of the metal plate. The metal plate has better mechanical properties than plastic plate and can better meet use requirements.

In some embodiments, the first plate is an aluminum alloy extrusion plate. The first plate is made of the aluminum alloy extrusion plate, so that the plate is light, and a design requirement of lightweight is met.

In some embodiments, a plurality of support bodies are provided in the same slot, and the plurality of support bodies are arranged in sequence in a length direction of the slot. Compared with providing one support body in the slot, providing the plurality of support bodies in the same slot facilitates insertion of the support bodies when the slot is long. This can improve assembly efficiency of the plate assembly.

In some embodiments, the support body is a metal member. The support body is made of the metal member, so that support strength of the support body is high, and a risk that an open end of the first plate collapses when the first plate and the second plate are welded is reduced.

In some embodiments, the cavity penetrates through the first plate in a first direction, and the slot is located at an end of the first plate in the first direction. The solution provided in this embodiment is adopted, so that the slot is easy to process, and the upper surface and the lower surface of the cavity are not easy to be damaged when the slot is processed.

In some embodiments, the slot penetrates through the cavity in a third direction, and the third direction is not parallel to the first direction. This arrangement facilitates product design, processing, and assembly.

In some embodiments, the plate assembly includes a plurality of first plates connected in sequence in a second direction, and the second direction is not parallel to the first direction. Compared with adopting only one first plate, the plate assembly adopts the structure provided in this embodiment, so that different sizes can be designed according to use requirements, to facilitate design and processing.

In some embodiments, slots of a plurality of first plates communicate in sequence to form a combined slot, and one support body is provided in the combined slot. This structure can reduce a quantity of support bodies required in the plate assembly and facilitate mounting of the support bodies. In addition, the support bodies can also correct positions of the plurality of first plates, so that the plurality of first plates are on the same plane as much as possible.

In some embodiments, the support body and the second plate are integrally formed. In this way, a connection structure between the support body and the second plate can be stable, and the reliability of the connection structure between the first plate and the second plate in the plate assembly can be further enhanced.

In some embodiments, the first plate and the second plate are connected by welding. This connection manner enables the connection structure of the first plate and the second plate to be stable.

In some embodiments, a welding manner is friction stir welding. Using friction stir welding as a welding manner includes but is not limited to the following advantages: (1) a microstructure change of a heat-affected zone of a welded joint is small, residual stress is low, and a welded workpiece does not easily deform; (2) welding of a long weld bead, a large cross section, and different positions can be completed at one time; (3) an operation process facilitates realization of mechanization and automation, a device is simple, energy consumption is low, effect is high, and requirements on a working environment are low; (4) there is no need to add a welding wire, and when aluminum alloy is welded, there is no need to remove an oxide film before welding, and protective gas is not needed, so that costs are low; (5) materials sensitive to hot cracks can be welded, and this manner is suitable for welding dissimilar materials; and (6) a welding process is safe, pollution-free, smoke-free, radiation-free, and the like.

In some embodiments, a joint between the first plate and the second plate has at least one weld bead. The solution provided in this embodiment is adopted, so that the connection between the first plate and the second plate is stable.

In some embodiments, a weld bead is present between an upper plate surface of the first plate and an upper plate surface of the second plate, and a weld bead is present between a lower plate surface of the first plate and a lower plate surface of the second plate. The solution provided in this embodiment is adopted, so that the connection between the first plate and the second plate is more stable.

According to a second aspect, an embodiment of this application provides a box body. The box body includes the plate assembly provided in any one of the foregoing embodiments, and the plate assembly is configured to carry a battery cell. The plate assembly provided in any one of the foregoing embodiments is used in the box body provided in this embodiment of this application, so that a risk of connection defects caused by different wall thicknesses in different areas when a first plate and a second plate in the plate assembly are connected can be reduced, and stability and reliability of a structure of the box body can be improved.

According to a third aspect, an embodiment of this application provides a battery. The battery includes a battery cell and the box body provided in any one of the foregoing embodiments, and the battery cell is mounted in the box body.

According to the battery provided in this embodiment of this application, the battery includes the battery cell and the box body provided in any one of the foregoing embodiments, so that a risk of connection defects caused by different wall thicknesses in different areas when a first plate and a second plate in a plate assembly are connected can be reduced, and reliability of the box body and stability and reliability of a structure of the battery are improved.

According to a fourth aspect, an embodiment of this application provides an electric apparatus, including the battery provided in any one of the foregoing embodiments. The battery is configured to provide electric energy to the electric apparatus.

The battery provided in any one of the foregoing embodiments is used in the electric apparatus provided in this embodiment of this application, so that a risk of connection defects caused by different wall thicknesses in different areas when a first plate and a second plate in a plate assembly are connected can be reduced, and stability and reliability of a structure of the battery are improved.

The foregoing description is merely an overview of the technical solutions of this application. In order to better understand the technical means in this application to implement same according to the content of this specification, and to make the above and other objectives, features, and advantages of this application more obvious and easier to understand, specific implementations of this application are described below.

### BRIEF DESCRIPTION OF DRAWINGS

To describe the technical solutions in embodiments of this application more clearly, the following briefly describes the accompanying drawings required for describing embodiments or illustrative technologies. Apparently, the accompanying drawings in the following description show merely some embodiments of this application, and a person of ordinary skill in the art may still derive other drawings from these accompanying drawings without creative efforts.
FIG. 1 is a schematic diagram of a structure of a vehicle according to some embodiments of this application;
FIG. 2 is a schematic diagram of an exploded structure of a battery according to some embodiments of this application;
FIG. 3 is a schematic diagram of a partial structure of a first plate and a support body in a plate assembly according to some embodiments of this application;
FIG. 4 is a schematic diagram of a partial structure of a plate assembly according to some embodiments of this application;
FIG. 5 is a schematic diagram of a structure of a first plate used in a plate assembly according to some embodiments of this application;
FIG. 6 is a side view of a structure of a first plate according to some embodiments of this application;
FIG. 7 is a side view of a structure of a first plate according to other embodiments of this application;
FIG. 8 is a schematic diagram of a structure of a support body used in a plate assembly according to some embodiments of this application;
FIG. 9 is a schematic diagram of a partial exploded structure of a plate assembly according to some embodiments of this application;
FIG. 10 is a partial enlarged schematic diagram at position A in FIG. 9; and
FIG. 11 is a partial exploded schematic diagram of a structure of a box body according to some embodiments of this application.

Reference signs in specific implementations are described as follows:
1000. vehicle;
100. battery; 200. controller; 300. motor;
10. housing; 11. cover; 12. box body; 20. battery cell;
120. plate assembly; 121, first plate; 122. support body; 123. third plate; 124. second plate; 126. weld bead;
1211. plate; 1212. reinforcing portion; 1213. sub-cavity; 1214. first recess; 1215. slot; 1217. protruding structure; 1218. upper body; 1219. lower body; 1221. second recess;
H. height of a protruding structure protruding from an inner wall of a cavity; X. first direction; Y1. second direction; Y2. third direction; and Z. height direction.

### DESCRIPTION OF EMBODIMENTS

To make the objectives, technical solutions, and advantages of this application clearer, the following describes this application in detail with reference to embodiments and accompanying drawings. It should be understood that the specific embodiments described herein are merely used to explain the present invention but are not intended to limit this application.

It should be noted that when a component is referred to as being "fastened to" or "provided on" another component, it may be directly or indirectly on the another component. When a component is referred to as being "connected to" another component, it may be directly or indirectly connected to the another component. The orientations or positional relationships indicated by terms "above", "below", "left", "right", and the like are based on the orientations or positional relationships shown in the accompanying drawings. Such terms are merely intended for the ease and brevity of description of this application, but do not indicate or imply that the apparatuses or components mentioned need to have specified orientations or need to be constructed and operated in the specified orientations, and therefore shall not be construed as any limitations on this application. A person of ordinary skill in the art can understand specific meanings of these terms according to specific situations. The terms "first" and "second" are merely intended for a purpose of ease of description, and shall not be understood as an indication or implication of relative importance or an implicit indication of a quantity of technical features. "A plurality of" means two or more, unless otherwise specifically defined.

The following describes in detail the technical solutions provided in this application with reference to the specific accompanying drawings and embodiments.

Currently, from the perspective of the market situation, application of power batteries is increasingly extensive. Power batteries are not only used in energy storage power systems such as hydro, thermal, wind, and solar power stations, but also widely used in electric means of transportation such as electric bicycles, electric motorcycles, and electric vehicles, and used in many other fields such as military equipment and aerospace. With continuous expansion of the application fields of power batteries, a market demand for the power batteries is also expanding, and power batteries are also gradually developing towards lightweight.

In a related technology, a bottom plate used for batteries is generally a hollow structural member with two open ends. On this basis, to realize reliability of a connection structure between the bottom plate and a frame and realize stable welding of the bottom plate and the frame, a support body is generally inserted at the open ends of the bottom plate. A size and a position of the support body correspond to a welding area of a corresponding end of the bottom plate. The welding area of the corresponding end of the bottom plate is an area, in the open end of the bottom plate, that is connected to the frame and is in contact with a welding device when the open end of the bottom plate is welded to the frame. In this way, when an assembly composed of the bottom plate and the support body is welded to a corresponding plate in the frame, the support body can stably support a welding head of the welding device to prevent the welding head from collapsing an upper body and a lower body of the bottom plate, so that a box body with a stable structure can be formed after the bottom plate and the frame are welded.

In the foregoing technology, to make strength of the bottom plate meet a preset requirement, a reinforcing portion (such as a reinforcing rib, a support rib, and the like) supported between the upper body and the lower body of the bottom plate is generally formed in a cavity of the bottom plate. To facilitate insertion of the support body, slotting is generally performed at the open end of the bottom plate, and the reinforcing portion in the welding area is completely removed during slotting. However, the bottom plate is generally spliced by a plurality of plates with a same structure or similar structures, and it is difficult to ensure that the plurality of plates are completely flush with each other during a splicing process. Flush means that upper surfaces of the plurality of plates are on the same plane, and lower surfaces of the plurality of plates are on the same plane. In this way, an upper surface and a lower surface of the bottom plate are in a wavy shape. In this case, reinforcing portions in the bottom plate are also arranged in a wavy shape, that is, upper end surfaces of the reinforcing portions are not on the same plane, and lower end surfaces of the reinforcing portions are not on the same plane. At this time, one of the upper end surfaces of all reinforcing portions has a highest position, and one of the lower end surfaces of all reinforcing portions has a lowest position. A distance between the upper end surface with the highest position and the lower end surface with the lowest position is greater than a height of a single reinforcing portion. Generally, the slotting operation is processed by using numerical control lathe and is completed by linear cutting. In this way, during the slotting operation, to completely remove the reinforcing portions in the welding area, an upper cutting position needs to correspond to the upper end surface with the highest position, and a lower cutting position needs to correspond to the lower end surface with the lowest position, that is, a height of a cut slot body is greater than the height of the reinforcing portions. In this way, a part of the upper body or the lower body of at least one plate is inevitably cut off, causing inconsistency in the thicknesses of different areas of the upper body or the lower body in the welding area of the bottom plate. In this case, connection defects are easy to occur when the bottom plate is subsequently connected to the corresponding plate in the frame. This affects reliability of a connection structure between the bottom plate and the corresponding plate. For example, welding defects are easy to occur when the bottom plate and the corresponding plate are welded.

To alleviate the foregoing problem, this embodiment of this application provides a plate assembly. The plate assembly limits a slot in a space enclosed by an inner wall of a cavity. In this way, a risk of processing the inner wall of the cavity in this area when processing the slot can be reduced, so that a risk that a thickness of an upper body or a lower body of the first plate is changed after processing the slot in a processing process can be reduced, and a risk of connection defects caused by different wall thicknesses in different areas when the first plate is connected to a second plate can be further reduced, to improve reliability of a connection structure between the first plate and the second plate.

It can be learned that if the bottom plate and the corresponding plate in the frame are connected by using a connection manner of the plate assembly provided in this embodiment of this application, the connection reliability of the bottom plate and the frame can be improved, to improve stability and reliability of a box body structure.

The plate assembly disclosed in this embodiment of this application can be used in a box body that is used for a battery and uses the plate assembly, a battery using the box body as a part of a housing, an electric apparatus using a battery as a power source, or various energy storage systems using a battery as an energy storage element. The electric apparatus may be but is not limited to a mobile phone, a tablet, a notebook computer, an electric toy, an electric tool, an electric bicycle, an electric vehicle, a ship, a spacecraft, and the like. The electric toy may be a fixed or mobile electric toy, for example, a game console, an electric toy car, an electric toy ship, and an electric toy airplane. The spacecraft may include an airplane, a rocket, a space shuttle, a spaceship, and the like.

For ease of description, an example in which an electric apparatus according to an embodiment of this application is a vehicle 1000 is used for description in the following embodiments.

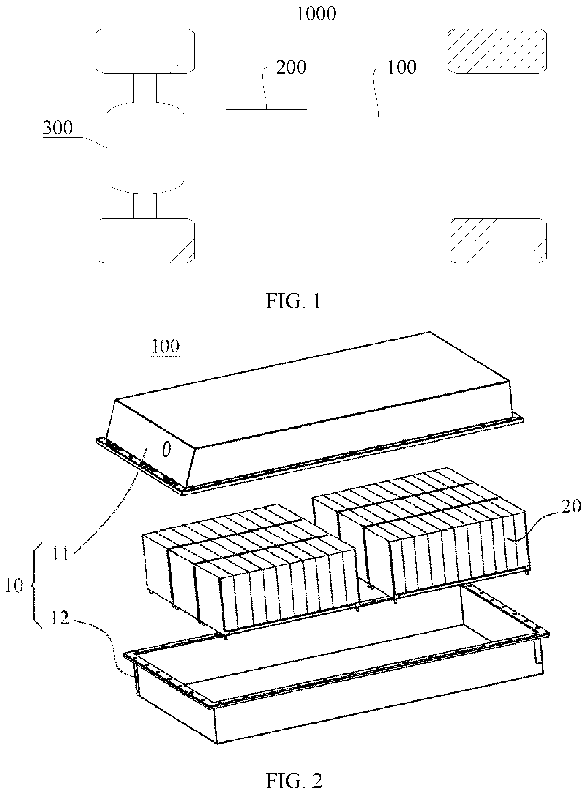

Refer to FIG. 1. FIG. 1 is a schematic diagram of a structure of a vehicle 1000 according to some embodiments of this application. The vehicle 1000 may be a fuel vehicle, a gas vehicle, or a new energy vehicle, where the new energy vehicle may be a battery electric vehicle, a hybrid electric vehicle, an extended-range vehicle, or the like. A battery 100 is provided inside the vehicle 1000, where the battery 100 may be provided at the bottom, front, or rear of the vehicle 1000. The battery 100 may be configured to supply power to the vehicle 1000. For example, the battery 100 may be used as an operational power supply for the vehicle 1000. The vehicle 1000 may further include a controller 200 and a motor 300. The controller 200 is configured to control the battery 100 to supply power to the motor 300, for example, to meet power needs of start, navigation, and driving of the vehicle 1000.

In some embodiments of this application, the battery 100 can not only be used as the operational power source for the vehicle 1000 but also as a driving power source for the vehicle 1000, to replace or partially replace fossil fuel or natural gas to provide driving power to the vehicle 1000.

Refer to FIG. 2. FIG. 2 is an exploded view of a battery 100 according to some embodiments of this application. The battery 100 includes a housing 10 and a battery cell 20, and the battery cell 20 is accommodated in the housing 10. The housing 10 is used to provide an accommodation space for the battery cell 20, and the housing 10 may adopt various structures. In some embodiments, the housing 10 may include a cover 11 and a box body 12. The cover 11 and the box body 12 are mutually covered. The cover 11 and the box body 12 jointly define the accommodation space for accommodating the battery cell 20. The box body 12 may be a hollow structure with an open end. The cover 11 may be a plate structure. The cover 11 covers an open side of the box body 12, so that the cover 11 and the box body 12 jointly define the accommodation space. The cover 11 and the box body 12 may both be hollow structures with one open side, and the open side of the cover 11 covers the open side of the box body 12. Certainly, the housing 10 formed by the cover 11 and the box body 12 may have various shapes, such as a cylinder, a cuboid, and the like.

In the battery 100, a plurality of battery cells 20 may be present, and the plurality of battery cells 20 may be in series connection, in parallel connection, or in series-parallel connection, where the series-parallel connection means that some of the plurality of battery cells 20 are in series connection, and some of the plurality of battery cells 20 are in parallel connection. The plurality of battery cells 20 may be directly in series connection, in parallel connection, or in series-parallel connection, and then an entirety composed of the plurality of battery cells 20 is accommodated in the housing 10. Certainly, the battery 100 may alternatively be formed in a manner in which the plurality of battery cells 20 are first in series connection, in parallel connection, or in series-parallel connection to form battery modules, and then a plurality of battery modules are in series connection, in parallel connection, or in series-parallel connection to form an entirety that is accommodated in the housing 10. The battery 100 may further include other structures. For example, the battery 100 may further include a busbar component configured to implement electrical connection between the plurality of battery cells 20.

Each battery cell 20 may be, but is not limited to, a secondary battery or a primary battery, or may be a lithium-sulfur battery, a sodium-ion battery, or a magnesium-ion battery. The battery cell 20 may be in a shape of a cylinder, a flat body, a cuboid, or other shapes.

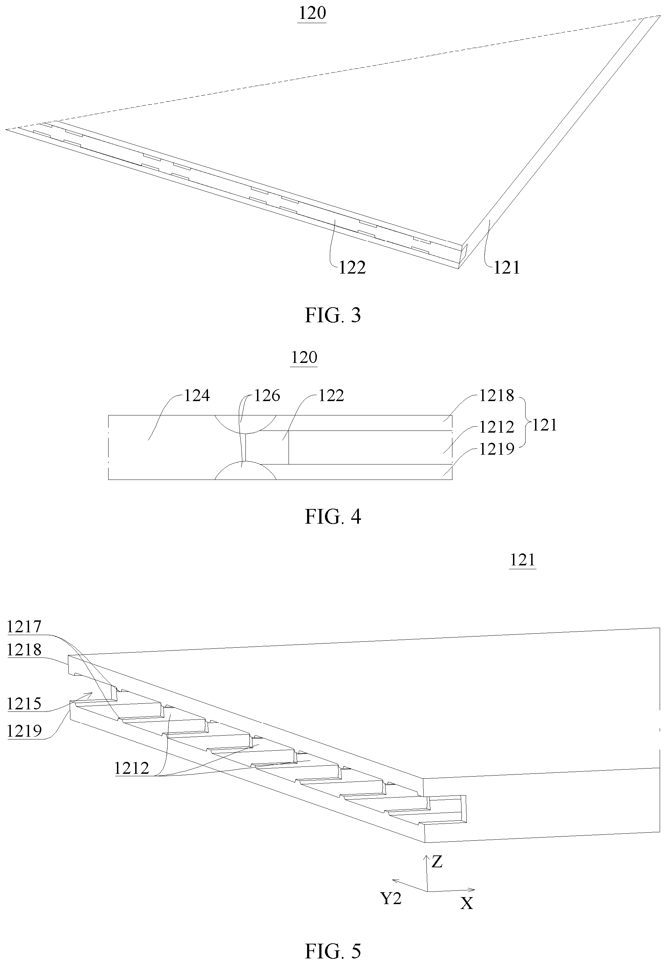

According to some embodiments of this application, refer to FIG. 3 to FIG. 7. An embodiment of this application provides a plate assembly 120. The plate assembly 120 includes a first plate 121, a second plate 124, and a support body 122. The first plate 121 is provided with a cavity and a reinforcing portion 1212. The reinforcing portion 1212 is located in the cavity. The first plate 121 in this embodiment has a hollow structure with the cavity. The reinforcing portion 1212 is generally formed between an upper surface and a lower surface of the cavity, and is configured to reinforce support strength of a hollow part of the first plate 121. The reinforcing portion 1212 may be of a strip structure extending in one direction that may be a length direction of the cavity or another direction arranged at an acute angle to a length direction of the cavity. The reinforcing portion 1212 may also be of a three-dimensional structure extending in a plurality of directions. For example, the reinforcing portion 1212 may be of a V-shaped structure, a rectangular structure, a rhombus structure, a tree-shaped structure, and the like. Specifically, this can be specifically set according to use requirements of the first plate 121. One reinforcing portion 1212 or a plurality of reinforcing portions 1212 may be provided in a same first plate 121. Specifically, this can be set according to use requirements of the first plate 121.

At least one end of the first plate 121 is provided with a slot 1215 with an opening facing outside the cavity. The slot 1215 is located in a space enclosed by an inner wall of the cavity. The support body 122 is inserted into the slot 1215. The second plate 124 is located on a side of the support body 122 far away from the first plate 121, and is connected to the first plate 121.

The foregoing "at least one end is provided with" includes the following two cases: In one case, one end is provided with the slot; and in another case, the both ends are separately provided with slots.

The slot 1215 is a continuous cavity for accommodating the support body 122, and is generally formed on an end surface of the first plate 121. At the same end of the first plate 121, one slot 1215 or a plurality of slots 1215 may be provided. Specifically, this may be determined according to use requirements. When the plurality of slots 1215 are provided at the same end, a length, a height, and other parameters of each slot 1215 may be the same or different. Specifically, this can be flexibly set according to the use requirements.

Generally, the first plate 121 includes an upper body 1218 and a lower body 1219 spaced apart in a height direction, and the cavity is formed between the upper body 1218 and the lower body 1219. That the slot 1215 is located in the space enclosed by the inner wall of the cavity means that the slot 1215 is located in the space enclosed by a lower surface of the upper body 1218, an upper surface of the lower body 1219, and a side surface of the cavity. That is, the provision of the slot 1215 does not damage the lower surface of the upper body 1218 and the upper surface of the lower body 1219.

It should be noted that when the reinforcing portion 1212 extends to the end, provided with the slot 1215, of the first plate 121, the slot 1215 may be made by removing all or a part of the corresponding end of the reinforcing portion 1212. Specifically, a processing criterion is that the lower surface of the upper body 1218 and the upper surface of the lower body 1219 are not damaged when the corresponding end of the reinforcing portion 1212 is removed.

The support body 122 is generally a component having specific hardness and can stably support the end, provided with the slot 1215, of the first plate 121. A shape of the support body 122 is generally adapted to a shape of the slot 1215, and a size of the support body 122 is generally slightly smaller than a size of the slot 1215. A design basis is that the support body 122 can be smoothly inserted into the slot 1215 and can stably support the end, provided with the slot 1215, of the first plate 121.

The second plate 124 may be a single plate or may be a part of a component (which may be a plate or a non-plate structure, such as a regular cube or an irregular cube). For example, the second plate 124 may be a part of a side beam in a frame of a box body used for a battery, that is, a plate-shaped structure protruding towards the first plate in the side beam. Specifically, this can be flexibly selected according to a type of the plate assembly and the use requirements.

The second plate 124 and the first plate 121 may be connected through one or more manners of overlapping, welding, insertion, and the like. Specifically, this can be flexibly selected according to the use requirements.

It should be noted that the plate assembly provided in this embodiment of this application may be a plate assembly formed by a bottom plate (equivalent to the first plate) in a battery and a plate (equivalent to the second plate), in the frame, connected to the first plate and located on a side of the support body far away from the first plate, or a plate assembly composed of two other plates in the battery, or a plate assembly composed of two plates in other fields.

According to the plate assembly 120 provided in this embodiment of this application, the slot 1215 is limited in the space enclosed by the inner wall of the cavity. In this way, a risk of processing the inner wall of the cavity in this area when processing the slot 1215 can be reduced, so that a risk that a thickness of the upper body 1218 or the lower body 1219 of the first plate 121 is changed after processing the slot 1215 in a processing process is reduced, and adverse influence of a connection structure between the first plate 121 and the second plate 124 due to different wall thicknesses in different areas of the first plate 121 can be reduced to some extent, to improve reliability of the connection structure between the first plate 121 and the second plate 124.

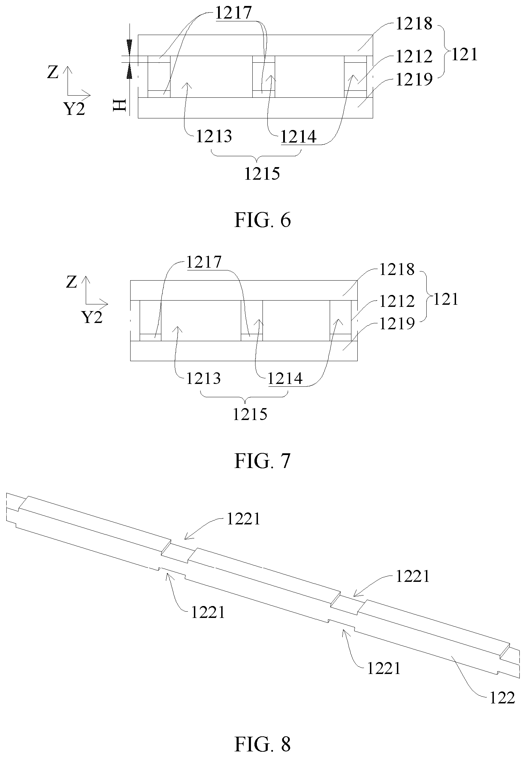

In some embodiments, as shown in FIG. 6 and FIG. 7, the reinforcing portion 1212 divides at least one end of the cavity into a plurality of sub-cavities 1213. At an end, provided with the sub-cavities 1213, of the first plate 121, at least one reinforcing portion 1212 is provided with a first recess 1214 with an opening facing outside the cavity, the first recess 1214 connects two adjacent sub-cavities 1213, and the first recess 1214 and the sub-cavities 1213 that are in communication form the slot 1215.

That the reinforcing portion 1212 divides at least one end of the cavity into a plurality of sub-cavities 1213 includes the following cases: in a first case, the reinforcing portion 1212 divides one end of the cavity into a plurality of sub-cavities 1213; and in a second case, the reinforcing portion 1212 respectively divides both ends of the cavity into a plurality of sub-cavities 1213.

That the reinforcing portion 1212 respectively divides both ends of the cavity into a plurality of sub-cavities 1213 includes but is not limited to the following cases: in a first case, each reinforcing portion 1212 is a continuous structure in a first direction X, has a same length as the cavity in the first direction X, and divides the whole cavity into a plurality of sub-cavities 1213, and each sub-cavity 1213 penetrates through the first plate 121 in the first direction X; and in a second case, a length of the reinforcing portion 1212 is different from the length of the cavity in the first direction X. In this case, the reinforcing portion 1212 located in the middle of the cavity and the reinforcing portion 1212 located at the end of the cavity may be different reinforcing portions 1212, and quantities of sub-cavities 1213 located at both ends of the cavity may be the same or may be different. When the quantities of the sub-cavities 1213 at both ends are the same, positions of the sub-cavities 1213 at both ends of the cavity may or may not be correspondingly arranged. Specifically, this can be determined according to the use requirements of the first plate 121. The first recess 1214 may be formed by cutting off a part of a corresponding end of the corresponding reinforcing portion 1212. This part can be any part of a middle part, an upper part, a middle upper part, a lower part, and a middle lower part of the reinforcing portion 1212. Specifically, this can be flexibly selected according to the use requirements.

That the first recess 1214 and the sub-cavities 1213 that are in communication form the slot 1215 means that a continuous space formed by the sub-cavity 1213 and the first recess 1214 that communicate in sequence with each other is the slot 1215.

The solution provided in this embodiment is used for the slot 1215. This facilitates preparation.

In some embodiments, as shown in FIG. 5 to FIG. 8, protruding structures 1217 are formed between at least one inner wall of the first recess 1214 in the height direction Z and the inner wall of the cavity. The support body 122 is provided with second recesses 1221 at positions corresponding to the protruding structures 1217. The second recesses 1221 are in insertion fit with the protruding structures 1217.

That protruding structures 1217 are formed between at least one inner wall of the first recess 1214 in the height direction Z and the inner wall of the cavity means that when a solid structure exists between any inner wall of the first recess 1214 in the height direction Z and the inner wall of the cavity, the solid structure is the protruding structure.

If the first recess 1214 is formed by removing an upper half part of the reinforcing portion 1212, as shown in FIG. 7, at this time, an upper surface of the first recess 1214 in the height direction Z is flush with the upper surface of the cavity, and no solid structure is present between the two surfaces, so that no protruding structure is present between the two surfaces. In addition, there is a specific distance between a lower surface of the first recess 1214 in the height direction Z and the lower surface of the cavity, and a solid structure is present between the two surfaces, so that the solid structure is a protruding structure. If the first recess 1214 is formed by removing a lower half part of the reinforcing portion 1212, at this time, the lower surface of the first recess 1214 in the height direction Z is flush with the lower surface of the cavity, and no solid structure is present between the two surfaces, so that no protruding structure is present between the two surfaces. In addition, there is a specific distance between the upper surface of the first recess 1214 in the height direction Z and the upper surface of the cavity, and a solid structure is present between the two surfaces, so that the solid structure is a protruding structure. If the first recess 1214 is formed by removing the middle part of the reinforcing portion 1212, as shown in FIG. 6, there is a specific distance between the upper surface of the first recess 1214 in the height direction Z and the upper surface of the cavity, and a solid structure is present between the two surfaces, so that the solid structure is a protruding structure. In addition, there is a specific distance between the lower surface of the first recess 1214 in the height direction Z and the lower surface of the cavity, and a solid structure is present between the two surfaces, so that the solid structure is a protruding structure.

The second recesses 1221 are configured to be in insertion fit with the corresponding protruding structures 1217, and a quantity, a position, and a shape of the second recesses 1221 are determined based on provision of the protruding structures 1217. That is, the second recess 1221 can avoid the protruding structure 1217 when the support body 122 is inserted into the slot 1215. The solution provided in this embodiment is adopted, so that the support body 122 can be positioned with the slot 1215 through the protruding structure 1217 and the second recess 1221, to stably support the corresponding end of the first plate 121.

In some embodiments, as shown in FIG. 5 and FIG. 6, the at least one reinforcing portion 1212 provided with the first recess 1214 has the protruding structures 1217 formed at both ends in the height direction Z. At least one reinforcing portion 1212 provided with the first recess 1214 means that one reinforcing portion 1212 of all reinforcing portions 1212 provided with the first recesses 1214 can have two protruding structures 1217, or a plurality of reinforcing portions 1212 can have two protruding structures 1217, or all reinforcing portions 1212 provided with the first recesses 1214 can have two protruding structures 1217, as long as the inner wall of the cavity is not damaged after processing the slot 1215.

Having the protruding structures 1217 formed at both ends in the height direction Z means that one of two protruding structures 1217 of the same reinforcing portion 1212 is located above the first recess 1214, and the other protruding structure 1217 is located below the first recess 1214.

Because the first recess 1214 is generally made by lathe processing, heights of different areas of the same first recess 1214 are almost the same, so that when the height of the first recess 1214 is smaller than that of the reinforcing portion 1212, and the first recess 1214 is located in the middle part of the reinforcing portion 1212, two protruding structures 1217 are formed after the reinforcing portion 1212 is cut. In this case, a connection root portion between the reinforcing portion 1212 and the upper body 1218 of the first plate 121 and a connection root portion between the reinforcing portion 1212 and the lower body 1219 of the first plate 121 are both reserved. In this way, there is a specific distance between a top surface of the first recess 1214 and the lower surface of the upper body 1218, and there is a specific distance between a bottom surface of the first recess 1214 and the upper surface of the lower body 1219. This can further reduce a risk of processing the inner wall of the cavity in a process of processing the first recess 1214.

In some embodiments, all reinforcing portions 1212 provided with the first recesses 1214 have the protruding structures 1217 formed at both ends in the height direction Z, that is, two protruding structures 1217 of the same reinforcing portion 1212 are separately provided above and below the corresponding first recess 1214. In this way, in this embodiment, all first recesses 1214 in this embodiment can be realized by slotting in the middle areas of the corresponding reinforcing portions 1212, so that there is a specific distance between the top surface of all first recesses 1214 and the lower surface of the upper body 1218, and there is a specific distance between the bottom surface of all first recesses 1214 and the upper surface of the lower body 1219. This can further reduce the risk of processing the inner wall of the cavity in the process of processing the first recess 1214.

In some embodiments, the second recess 1221 is in clearance fit with the corresponding protruding structure 1217. Clearance fit means that after the support body 122 is inserted into the slot 1215, a gap between an inner wall of the second recess 1221 and an outer wall of the corresponding protruding structure 1217 is greater than or equal to zero. The second recess 1221 is in clearance fit with the corresponding protruding structure 1217. This facilitates the insertion of the support body 122 into the slot 1215.

In some embodiments, as shown in FIG. 6, a height H of the protruding structure 1217 protruding from the inner wall of the cavity is 0.3 mm-1.2 mm. With this arrangement, the risk of processing the inner wall of the cavity when processing the slot 1215 can be reduced.

In some embodiments, a height H of the protruding structure 1217 protruding from the inner wall of the cavity is 0.5 mm-1 mm. With this arrangement, the risk of processing the inner wall of the cavity when processing the slot 1215 is low, and the size of the slot 1215 is large, to facilitate the insertion of the support body 122.

In some embodiments, as shown in FIG. 5 to FIG. 7, the first plate 121 includes the upper body 1218 and the lower body 1219 provided at an interval in the height direction Z. The cavity is formed between the upper body 1218 and the lower body 1219. The reinforcing portion 1212 is provided on the upper body 1218 and/or the lower body 1219.

The upper body 1218 is a plate-shaped solid structure located at an upper part of the first plate 121 from the perspective shown in any one of FIG. 5 to FIG. 7. The lower body 1219 is a plate-shaped solid structure located at a lower part of the first plate 121 from the perspective shown in any one of FIG. 5 to FIG. 7.

Generally, the materials of the upper body 1218, the lower body 1219, and the reinforcing portion 1212 are the same, and the materials may be different in special cases. Specifically, this can be flexibly selected according to the use requirements. A thickness of the upper body 1218 may be the same as or different from that of the lower body 1219. Specifically, this can be flexibly selected according to the use requirements.

That the reinforcing portion 1212 is provided on the upper body 1218 and/or the lower body 1219 means that the reinforcing portion 1212 may be provided on the upper body 1218 or the lower body 1219, or may be connected between the upper body 1218 and the lower body 1219. A provision manner may be integrated molding, insertion, and the like.

The first plate 121 adopts the structure provided in this embodiment, and the structure is simple, light, and easy to process.

In some embodiments, in the same slot 1215, the lower surface of the upper body 1218 has a lowest point, and a bottom surface of any protruding structure 1217 connected to the lower surface of the upper body 1218 is flush with or below the lowest point.

The lowest point is a point, in the lower surface of the upper body 1218 in the corresponding slot 1215, closest to a same reference surface (such as a desktop and floor of a worktable where the plate assembly 120 is located), and also a point, in the lower surface of the upper body 1218, having a smallest vertical distance from a reference surface in the height direction Z, where any plane in the lower surface of the first plate is taken as the reference surface. Flush means that the bottom surface of the corresponding protruding structure 1217 is on the same plane as the corresponding lowest point.

In the same slot 1215, that the lower surface of the upper body 1218 has a lowest point means that when one slot 1215 is present, and the lower surface of an area, of the upper body 1218, corresponding to the slot 1215 is a curved surface, the curved surface has a lowest point. When the lower surface of the area, of the upper body 1218, corresponding to the slot 1215 is a plane, if the plane is parallel to the reference surface, the lowest point is any point in the plane; and if the plane is provided in an inclined manner and forms a non-zero angle with the reference surface, the lowest point is one point or any one of a plurality of points, in the plane, having a shortest distance from the reference surface. When a plurality of slots 1215 are present, in a plurality of areas that are of the upper body 1218 and that separately correspond to the plurality of slots 1215, a lower surface of each area has a lowest point, and lowest points corresponding to different slots 1215 may be located on a same horizontal line or may be provided in a staggered manner.

In addition, it should be noted that when a plurality of slots 1215 are present, only one slot 1215 can meet the foregoing requirements, that is, in one slot 1215, the lower surface of the upper body 1218 has the lowest point, and the bottom surface of any protruding structure 1217 connected to the lower surface of the upper body 1218 is flush with or below the lowest point. Alternatively, all slots 1215 may meet the foregoing requirements, that is, in any slot 1215, the lower surface of the upper body 1218 has the lowest point, and the bottom surface of any protruding structure 1217 connected to the lower surface of the upper body 1218 is flush with or below the lowest point. Alternatively, a part of the slots 1215 meets the foregoing requirements, and the other part of the slots 1215 does not meet the foregoing requirements. In this case, in any one slot 1215 of the part of slots 1215, the lower surface of the upper body 1218 has the lowest point, and the bottom surface of any protruding structure 1217 connected to the lower surface of the upper body 1218 is flush with or below the lowest point.

The plate assembly 120 provided in this embodiment defines a positional relationship, in the same slot 1215, between the bottom surface of any protruding structure 1217 connected to the upper body 1218 and the lower surface of the upper body 1218, so that the bottom surfaces of all protruding structures 1217 connected to the upper body 1218 are not higher than the lowest point of the corresponding area of the upper body 1218. In this way, the upper surface of the first recess 1214 in the corresponding slot 1215 can be obtained through horizontal cutting, and the surface of the upper body 1218 is not damaged during cutting, that is, the inner wall of the cavity is not processed, and preparation efficiency of the slot 1215 can be improved, so that a plurality of goals are obtained through a single action.

In some embodiments, in the same slot 1215, the upper surface of the lower body 1219 has a highest point, and a top surface of any protruding structure 1217 connected to the upper surface of the lower body 1219 is flush with or above the highest point.

The highest point is a point, in the upper surface of the lower body 1219 in the corresponding slot 1215, farthest from a same reference surface (such as a desktop and floor of a worktable where the plate assembly 120 is located), and also a point, in the upper surface of the lower body 1219, having a greatest vertical distance from a reference surface in the height direction Z, where any plane in the lower surface of the first plate is taken as the reference surface. Flush means that the top surface of the corresponding protruding structure 1217 is located on the same plane as the corresponding highest point.

In the same slot 1215, that the upper surface of the lower body 1219 has a highest point means that when one slot 1215 is present, and the upper surface of an area, of the lower body 1219, corresponding to the slot 1215 is a curved surface, the curved surface has the highest point. When the upper surface of the area, of the lower body 1219, corresponding to the slot 1215 is a plane, if the plane is parallel to the reference surface, the highest point is any point in the plane; and if the plane forms a non-zero angle with the reference surface, the highest point is one point or any one of a plurality of points, in the plane, having a farthest distance from the reference surface. When a plurality of slots 1215 are present, in a plurality of areas that are of the lower body 1219 and that separately correspond to the plurality of slots 1215, an upper surface of each area has a highest point, and highest points corresponding to different slots 1215 may be located on a same horizontal line, or may be provided in a staggered manner.

In addition, it should be noted that when a plurality of slots 1215 are present, only one slot 1215 can meet the foregoing requirements, that is, in one slot 1215, the upper surface of the lower body 1219 has the highest point, and the top surface of any protruding structure 1217 connected to the upper surface of the lower body 1219 is flush with or above the highest point. Alternatively, all slots 1215 meet the foregoing requirements, that is, in any slot 1215, the upper surface of the lower body 1219 has the highest point, and the top surface of any protruding structure 1217 connected to the upper surface of the lower body 1219 is flush with or above the highest point. Alternatively, a part of the slots 1215 meets the foregoing requirements, and the other part of the slots 1215 does not meet the foregoing requirements. In this case, in any one slot 1215 of the part of slots 1215, the upper surface of the lower body 1219 has the highest point, and the top surface of any protruding structure 1217 connected to the upper surface of the lower body 1219 is flush with or above the highest point.

The plate assembly 120 provided in this embodiment defines a positional relationship, in the same slot 1215, between the top surface of any protruding structure 1217 connected to the lower body 1219 and the upper surface of the lower body 1219, so that the top surfaces of all protruding structures 1217 connected to the lower body 1219 are not lower than the highest point of the corresponding area of the lower body 1219. In this way, the lower surface of the first recess 1214 in the corresponding slot 1215 can be obtained through horizontal cutting, and the upper surface of the lower body 1219 is not damaged during cutting, that is, the inner wall of the cavity is not processed, and preparation efficiency of the slot 1215 can be improved, so that a plurality of goals are obtained through a single action.

In some embodiments, the first plate 121 adopts an integrated structure. The integrated structure is a structure that is integrally formed through pouring, casting, and the like, or a structure that is obtained by processing an integrally-formed structure through extrusion, stamping, and the like. The first plate 121 adopts an integrated structure, and the structure is stable.

In some embodiments, the first plate 121 is a metal plate. The first plate 121 is a metal plate, so that mechanical properties are better than those of a plastic plate, and the use requirements can be better met.

In some embodiments, the first plate 121 is an aluminum alloy extrusion plate. The first plate 121 is the aluminum alloy extrusion plate, so that the plate is light, and a design requirement of lightweight is met.

In some embodiments, a plurality of support bodies 122 are provided in the same slot 1215, and the plurality of support bodies 122 are arranged in sequence in the length direction of the slot 1215.

That a plurality of support bodies 122 are provided in the same slot 1215 means that when one slot 1215 is present, the plurality of support bodies 122 are provided in the slot 1215; and when a plurality of slots 1215 are present, the plurality of support bodies 122 are provided in at least one slot 1215. That when a plurality of slots 1215 are present, and the plurality of support bodies 122 are provided in at least one slot 1215, the support bodies 122 are arranged in sequence in the length direction of the slot 1215 means that all support bodies 122 located in the same slot 1215 are arranged in sequence in an extension direction of the slot 1215.

Compared with providing one supporting body 122 in the slot 1215, providing the plurality of support bodies 122 in the same slot 1215 facilitates insertion of the support bodies 122 when the slot 1215 is long. This can improve assembly efficiency of the plate assembly 120.

In some embodiments, the support body 122 is a metal member. The metal member mentioned here can be a stainless steel member, an alloy member, and the like. Specifically, this can be selected according to the use requirements.

The support body 122 is made of the metal member, so that support strength of the support body 122 is high, and a risk that an open end of the first plate 121 collapses when the first plate 121 and the second plate 124 are welded is reduced.

In some embodiments, the cavity penetrates through the first plate 121 in a first direction X. The slot 1215 is located at an end of the first plate 121 in the first direction X. The first direction X is generally a length direction of the first plate 121, or may be a width direction of the first plate 121, or may be a direction arranged at an included angle to the length direction of the first plate 121, or may be a direction arranged at an included angle to the width direction of the first plate 121. The solution provided in this embodiment is adopted, so that the slot 1215 is easy to process, and the upper surface and the lower surface of the cavity are not easy to be damaged when the slot 1215 is processed.

In some embodiments, as shown in FIG. 5, the slot 1215 penetrates the cavity in a third direction Y2, and the third direction Y2 is not parallel to the first direction X. That the third direction Y2 is not parallel to the first direction X means that there is a non-zero included angle between the third direction Y2 and the first direction X. Generally, the third direction Y2 is perpendicular to the first direction X, or may be a direction at other included angles (such as 60 degrees, 80 degrees, and the like) to the first direction X. Specifically, this can be flexibly set according to the use requirements. That the slot 1215 penetrates through the cavity in a third direction Y2 means that a length of the slot 1215 in the third direction Y2 is equal to a length of the cavity in the third direction Y2, that is, only one slot 1215 is provided, so that the support body can support all different areas of an opening edge of a corresponding open end. This arrangement facilitates product design, processing, and assembly.

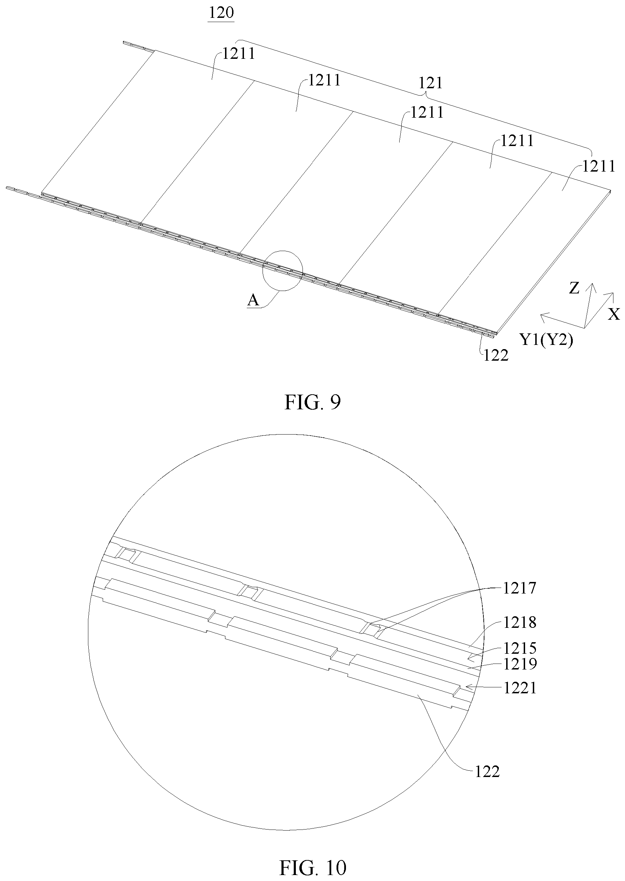

In some embodiments, as shown in FIG. 9 and FIG. 10, the plate assembly includes a plurality of first plates 121 connected in sequence in a second direction Y1, and the second direction Y1 is not parallel to the first direction X.

That the second direction Y1 is not parallel to the first direction X means that there is a non-zero included angle between the second direction Y1 and the first direction X. Generally, the second direction Y1 is perpendicular to the first direction X, or may be a direction at other included angles (such as 60 degrees, 80 degrees, and the like) to the first direction X. Specifically, this can be flexibly set according to the use requirements.

A quantity of that first plates 121 can be selected based on a size of a single first plate 121 and a required size of the plate assembly. Sizes of different first plates 121 may be the same or may be different, and a quantity of reinforcing portions in the different first plates 121 may be the same or may be different.

Compared with adopting only one first plate 121, the plate assembly adopts the structure provided in this embodiment, so that different sizes can be designed according to the use requirements, to facilitate design and processing.

In some embodiments, slots 1215 of the plurality of first plates 121 communicate in sequence to form a combined slot, and one support body 122 is provided in the combined slot. This structure can reduce a quantity of support bodies 122 required in the plate assembly and facilitate mounting of the support bodies 122. In addition, the support bodies 122 can also correct positions of the plurality of first plates 121, so that the plurality of first plates 121 are on the same plane as much as possible.

In some embodiments, the support body 122 and the second plate 124 are integrally formed. In this embodiment, the support body 122 and the second plate 124 may be an integral member formed by pouring, stamping, and the like. In this way, a connection structure between the support body 122 and the second plate 124 can be stable, and reliability of the connection structure between the first plate and the second plate in the plate assembly can be further enhanced.

In some embodiments, the first plate 121 and the second plate 124 are connected by welding. This connection manner enables the connection structure of the first plate 121 and the second plate 124 to be stable.

In some embodiments, a welding manner is friction stir welding. Using friction stir welding as a welding manner includes but is not limited to the following advantages: (1) a microstructure change of a heat-affected zone of a welded joint is small, residual stress is low, and a welded workpiece does not easily deform; (2) welding of a long weld bead, a large cross section, and different positions can be completed at one time; (3) an operation process facilitates realization of mechanization and automation, a device is simple, energy consumption is low, effect is high, and requirements on a working environment are low; (4) there is no need to add a welding wire, and when aluminum alloy is welded, there is no need to remove an oxide film before welding, and protective gas is not needed, so that costs are low; (5) materials sensitive to hot cracks can be welded, and this manner is suitable for welding dissimilar materials; and (6) a welding process is safe, pollution-free, smoke-free, radiation-free, and the like.

In some embodiments, as shown in FIG. 4, a joint between the first plate 121 and the second plate 124 has at least one weld bead 126. The weld bead 126 is a single weld bead formed through each deposition when the first plate 121 and the second plate 124 are welded. When the first plate 121 and the second plate 124 are welded, a connection surface or two connection surfaces may be formed between the first plate 121 and the second plate 124. Each connection surface may have one weld bead.

For example, an upper plate surface of the first plate 121 and an upper plate surface of the second plate 124 are welded to form a connection surface. In this case, one weld bead is formed between the upper plate surface of the first plate 121 and the upper plate surface of the second plate 124. Alternatively, a lower plate surface of the first plate 121 and a lower plate surface of the second plate 124 are welded to form a connection surface. In this case, one weld bead is formed between the lower plate surface of the first plate 121 and the lower plate surface of the second plate 124. Alternatively, an upper plate surface of the first plate 121 and an upper plate surface of the second plate 124 are welded to form a connection surface, and a lower plate surface of the first plate 121 and a lower plate surface of the second plate 124 are welded to form another connection surface. In this case, one weld bead is formed between the upper plate surface of the first plate 121 and the upper plate surface of the second plate 124, and another weld bead is formed between the lower plate surface of the first plate 121 and the lower plate surface of the second plate 124.

The solution provided in this embodiment is adopted, so that connection between the first plate 121 and the second plate 124 is stable.

In some embodiments, a weld bead 126 is present between the upper plate surface of the first plate 121 and the upper plate surface of the second plate 124, and a weld bead 126 is present between the lower plate surface of the first plate 121 and the lower plate surface of the second plate 124.

In this case, two plate surfaces of the first plate 121 and two plate surfaces of the second plate 124 are welded separately. Compared with welding only one plate surface of the first plate 121 and the corresponding plate surface of the second plate 124, the solution provided in this embodiment is adopted, so that the connection between the first plate 121 and the second plate 124 is more stable.

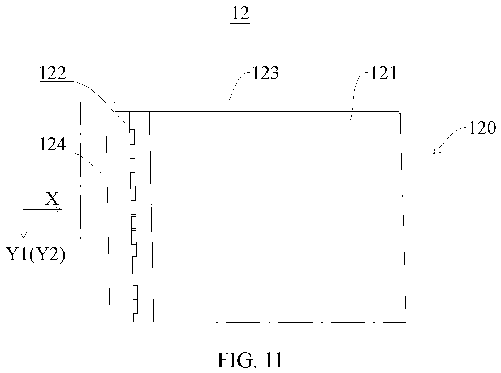

According to some embodiments of this application, as shown in FIG. 2, FIG. 4, and FIG. 11, this application further provides a box body 12. The box body 12 includes the plate assembly 120 provided in any one of the foregoing embodiments. The plate assembly 120 is configured to carry a battery cell.

Generally, in addition to the first plate 121 and the second plate 124, the box body 12 further includes a third plate 123. The third plate 123 and the second plate 124 are respectively connected with a side wall of the first plate 121 in a sealed manner, and the third plate 123, the second plate 124, and the first plate 121 enclose an accommodating cavity for accommodating the battery 100.

Generally, a sealed connection manner is welding, and other manners (such as a manner using bolt connection and a sealant, insertion sealing, and the like) can also be used for sealing connection. Specifically, this can be selected according to the use requirements, as long as liquid in the accommodating cavity enclosed by the first plate 121, the second plate 124, and the third plate 123 does not leak, or requirements for holding the battery 100 are met.

The plate assembly 120 provided in any one of the foregoing embodiments is used in the box body 12 provided in this embodiment of this application, so that a risk of connection defects caused by different wall thicknesses in different areas when the first plate 121 and the second plate 124 in the plate assembly 120 are connected can be reduced, and stability and reliability of a structure of the box body 12 can be improved.

According to some embodiments of this application, as shown in FIG. 2 to FIG. 11, a box body 12 is provided, including a second plate 124, a first plate 121, and a support body 122. The first plate 121 is provided with a cavity and a reinforcing portion 1212. The cavity penetrates through the first plate in a first direction X. The reinforcing portion 1212 is located in the cavity and extends in the first direction X to divide the cavity into a plurality of sub-cavities 1213. A slot 1215 is provided at an open end of the first plate 121 at a position cooperating with the support body 122, and the slot 1215 is located between an upper body 1218 and a lower body 1219 of the first plate 121. The slot 1215 penetrates two side walls of the first plate 121 in a third direction Y2. The third direction Y2 is generally a direction perpendicular to the first direction X.

In this way, middle parts of both ends of the reinforcing portion 1212 are removed, and root portions where the reinforcing portion 1212 is connected to the upper body 1218 and the lower body 1219 of the first plate 121 are reserved, to form a first recess 1214. The first recess 1214 and the sub-cavities 1213 communicate to form a continuous slot 1215. The root portions form protruding structures protruding from the inner wall of the cavity.

A first surface facing the upper body 1218 and a second surface facing the lower body 1219 of the support body 122 are separately provided with second recesses 1221 that are in insertion fit with the corresponding protruding structures. The support body 122 is inserted into the slot 1215, to support a welding head when the first plate 121 and the second plate 124 are welded.

The box body 12 also includes side beams. Four side beams are generally present. The side beams have plate-shaped structures protruding from their own side walls, and are welded to the four side walls of the first plate 121 through the plate-shaped structures. Among the four plate-shaped structures, a plate-shaped structure connected to the side wall, provided with the support body 122, of the first plate 121 is the second plate 124, and among the four plate-shaped structures, a plate-shaped structure connected with the side wall, not provided with the support body 122, of the first plate 121 is the third plate 123. Friction stir welding is generally used for welding.

The box body 12 provided in this embodiment is adopted, so that thicknesses of different positions of the upper body 1218 and the lower body 1219 in the first plate 121 are consistent, and quality of welding with the second plate 124 is high. After welding, as shown in FIG. 4, stability and reliability of the box body 12 are high.

According to some embodiments of this application, as shown in FIG. 2, this application further provides a battery 100. The battery 100 includes a battery cell 20 and the box body 12 provided in any one of the foregoing embodiments.

As described above, the battery 100 in this embodiment may further include a cover 11, an electrolyte, and the like, and a specific arrangement manner is not described herein again.

According to the battery 100 provided in this embodiment of this application, the battery 100 includes the battery cell 20 and the box body 12 provided in any one of the foregoing embodiments, so that a risk of connection defects caused by different wall thicknesses in different areas when a first plate 121 and a second plate 124 in a plate assembly 120 are connected can be reduced, and reliability of the box body 12 and stability and reliability of a structure of the battery 100 are improved.

According to some embodiments of this application, this application further provides an electric apparatus. The electric apparatus includes the battery provided in any one of the foregoing embodiments. The battery is used to provide electric energy for the electric apparatus.

The electric apparatus may be any device or system using the battery. Generally, in addition to the battery, the electric apparatus includes other structures. For example, when the electric apparatus is a vehicle, the electric apparatus may also include a vehicle frame, a controller, and the like. Specifically, this is determined based on a specific type of the electric apparatus. Details are not described herein again.

The battery provided in any one of the foregoing embodiments is used in the electric apparatus provided in this embodiment of this application, so that a risk of connection defects caused by different wall thicknesses in different areas when a first plate and a second plate in a plate assembly are connected can be reduced, and stability and reliability of a structure of the battery are improved.

It should be noted that this application is not limited to the foregoing embodiments. The foregoing embodiments are merely examples, and embodiments having substantially the same constructions as the technical ideas and having the same effect within the scope of the technical solution of this application are all included in the technical scope of this application. In addition, without departing from the gist of this application, various modifications made to the embodiments that can be conceived by a person skilled in the art, and other manners constructed by combining some of the constituent elements in embodiments are also included in the scope of this application.

## Claims

1. A plate assembly, **characterized in that** the plate assembly comprises a first plate, a second plate, and a support body, wherein the first plate is provided with a cavity and a reinforcing portion, and the reinforcing portion is located in the cavity;
at least one end of the first plate is provided with a slot with an opening facing outside the cavity, and the slot is located in a space enclosed by an inner wall of the cavity;
the support body is inserted into the slot; and
the second plate is located on a side of the support body far away from the first plate, and is connected to the first plate.

2. The plate assembly according to claim 1, **characterized in that** the reinforcing portion divides at least one end of the cavity into a plurality of sub-cavities; and
at the end, provided with the sub-cavities, of the first plate, at least one reinforcing portion is provided with a first recess with an opening facing outside the cavity, the first recess connects two adjacent sub-cavities, and the first recess and the sub-cavities that are in communication form the slot.

3. The plate assembly according to claim 2, **characterized in that** protruding structures are formed between at least one inner wall of the first recess in a height direction and the inner wall of the cavity; and
the support body is provided with second recesses at positions corresponding to the protruding structures, and the second recesses are in insertion fit with the protruding structures.

4. The plate assembly according to claim 3, **characterized in that** the at least one reinforcing portion provided with the first recess has the protruding structures formed at both ends in the height direction.

5. The plate assembly according to claim 3, **characterized in that** all reinforcing portions provided with the first recesses have the protruding structures formed at both ends in the height direction.

6. The plate assembly according to any one of claims 3 to 5, **characterized in that** the second recesses are in clearance fit with the corresponding protruding structures.

7. The plate assembly according to any one of claims 3 to 6, **characterized in that** a height of the protruding structures protruding from the inner wall of the cavity is 0.3 mm-1.2 mm.

8. The plate assembly according to any one of claims 3 to 6, **characterized in that** a height of the protruding structures protruding from the inner wall of the cavity is 0.5 mm-1 mm.

9. The plate assembly according to any one of claims 3 to 8, **characterized in that** the first plate comprises an upper body and a lower body spaced apart in the height direction, the cavity is formed between the upper body and the lower body, and the reinforcing portion is arranged on the upper body and/or the lower body.

10. The plate assembly according to claim 9, **characterized in that** in the same slot, a lower surface of the upper body has a lowest point, and a bottom surface of any protruding structure connected to the lower surface of the upper body is flush with or below the lowest point.

11. The plate assembly according to claim 9 or 10, **characterized in that** in the same slot, an upper surface of the lower body has a highest point, and a top surface of any protruding structure connected to the upper surface of the lower body is flush with or above the highest point.

12. The plate assembly according to any one of claims 1 to 11, **characterized in that** the first plate is of an integrated structure.

13. The plate assembly according to any one of claims 1 to 12, **characterized in that** the first plate is a metal plate.

14. The plate assembly according to any one of claims 1 to 13, **characterized in that** the first plate is an aluminum alloy extrusion plate.

15. The plate assembly according to any one of claims 1 to 14, **characterized in that** a plurality of support bodies are provided in the same slot, and the plurality of support bodies are arranged in sequence in a length direction of the slot.

16. The plate assembly according to any one of claims 1 to 15, **characterized in that** the support body is a metal member.

17. The plate assembly according to any one of claims 1 to 16, **characterized in that** the cavity penetrates through the first plate in a first direction, and the slot is located at an end of the first plate in the first direction.

18. The plate assembly according to claim 17, **characterized in that** the slot penetrates through the cavity in a third direction, the third direction being not parallel to the first direction.

19. The plate assembly according to claim 17 or 18, **characterized in that** the plate assembly comprises a plurality of first plates connected in sequence in a second direction, the second direction being not parallel to the first direction.

20. The plate assembly according to claim 19, **characterized in that** slots of the plurality of first plates communicate in sequence to form a combined slot, and one support body is provided in the combined slot.

21. The plate assembly according to any one of claims 1 to 20, **characterized in that** the support body and the second plate are integrally formed.

22. The plate assembly according to any one of claims 1 to 21, **characterized in that** the first plate and the second plate are connected by welding.

23. The plate assembly according to claim 22, **characterized in that** a welding manner is friction stir welding.

24. The plate assembly according to claim 22 or 23, **characterized in that** a joint between the first plate and the second plate has at least one weld bead.

25. The plate assembly according to claim 22 or 23, **characterized in that** a weld bead is present between an upper plate surface of the first plate and an upper plate surface of the second plate, and a weld bead is present between a lower plate surface of the first plate and a lower plate surface of the second plate.

26. A box body, **characterized in that** the box body comprises the plate assembly according to any one of claims 1 to 25, and the plate assembly is configured to carry a battery cell.

27. A battery, **characterized in that** the battery comprises a battery cell and the box body according to claim 26.

28. An electric apparatus, **characterized by** comprising the battery according to claim 27, wherein the battery is configured to provide electric energy for the electric apparatus.
